# EUROPÄISCHE PATENTSCHRIFT

(11) **EP 3 157 992 B1**
(45) Veröffentlichungstag und Bekanntmachung des Hinweises auf die Patenterteilung: **19.12.2018**
(21) Anmeldenummer: 15729804.3
(22) Anmeldetag: 12.06.2015
(51) Int. Cl.: C08K 3/34, C09D 143/04

(54) **FUNKTIONALISIERTE COPOLYMERISATE UND DEREN VERWENDUNG ALS BINDEMITTEL FÜR BESCHICHTUNGEN**
FUNCTIONALISED COPOLYMERS AND THEIR USE AS BINDERS FOR COATINGS
COPOLYMERES FONCTIONNALISÉS ET LEUR UTILISATION COMME LIANTS POUR REVÊTEMENTS

(30) Priorität: 18.06.2014 EP 14172990
(43) Veröffentlichungstag der Anmeldung: 26.04.2017
(73) Patentinhaber: BASF SE, 67056 Ludwigshafen am Rhein (DE)
(72) Erfinder: TISSIER, Nicolas, F-67000 Strasbourg (FR); ROST, Tanja, 68165 Mannheim (DE); CABRERA, Ivan, 63303 Dreieich (DE)
(74) Vertreter: BASF IP Association
(86) Internationale Anmeldenummer: PCT/EP2015/063182
(87) Internationale Veröffentlichungsnummer: WO 2015/193192

(56) Entgegenhaltungen:
- WO-A1-2013/045259
- WO-A1-2014/075969
- DE-A1- 4 402 408
- DE-A1- 19 537 935
- DE-A1- 19 856 148
- DE-A1- 19 902 454

## Beschreibung

Die vorliegende Erfindung betrifft funktionalisierte Copolymerisate in Form deren wäßriger Dispersionen oder in Wasser redispergierbaren Pulver, Verfahren zu deren Hersstellung sowie deren Verwendung als Bindemittel für Anstrichmittel, insbesondere für hochgefüllte Innenfarben mit einer Pigmentvolumenkonzentration (PVK) >60, und ganz besonders bevorzugt für wasserglashaltige oder silikatreiche Anstrichmittel zur Verbesserung der Nassscheuerbeständigkeit. Die PVK beschreibt das Verhältnis des Volumens an Pigmenten (V_{P}) und Füllstoffen (V_{F}) zum Gesamtvolumen, bestehend aus den Volumina an Bindemittel (V_{B}), Pigmenten und Füllstoffen eines getrockneten Beschichtungsfilms in Prozent: PVK = (V_{P} + V_{F}) x 100 / (V_{P} + V_{F} + V_{B}) (vgl. Ullmann's Enzyklopädie der technischen Chemie, 4. Auflage, Band 15, S. 667). Bei Farben, die oberhalb der kritischen PVK formuliert sind, bilden sich beim Trocknen poröse Strukturen aus (vgl. Polymer Dispersions and Their Industrial Applications, Wiley VCH, Weinheim, 2002, S 126 ff.)). Das Deckvermögen solcher Farben wird vorrangig durch die im Farbfilm enthaltenen Lufteinschlüsse und somit durch die Porösität des trockenen Farbfilms bestimmt.

Die Porösität liefert hierbei ein Maß für die im Gesamtvolumen der trockenen Farbe vorhandenen Hohlräume.

Eine Möglichkeit zur Erhöhung der Porösität und damit einer Erhöhung des Deckvermögens stellt die Verwendung von anorganischen Füllstoffen wie Calciumcarbonaten, Silikaten oder Wasserglas, welches ein SiO₂ Netzwerk ausbilden kann, dar. Die damit verbundene Erhöhung der PVK ermöglicht dem Farbenhersteller Kostenersparnisse, indem sowohl weniger Bindemittel als auch Weißpigment eingesetzt werden können.

Es zeigte sich aber, dass die Erhöhung der Porösität und die damit verbundene Deckkrafterhöhung in der Regel zu einer verringerten Nassscheuerbeständigkeit (gemäß ISO 11998:2006) führt.

Die Aufgabe der vorliegenden Erfindung liegt daher in der Bereitstellung einer Bindemittelzusammensetzung, die auch bei einer Erhöhung der Porösität des trockenen Farbfilms insbesondere in wasserglashaltigen oder silikatreichen Farbformulierungen eine konstant hohe Nassscheuerfestigkeit liefert.

Aus dem Stand der Technik ist bekannt dass durch den Einsatz von hydrolysierbaren Vinylsilanen bei der Herstellung von Polymerdispersionen Verbesserungen der Eigenschaften als Bindemittel für Farben erzielt werden können. So wird in der DE-C 2148457 (GB-A 1407827) beschrieben, wie durch den Einsatz von wässrigen Dispersionen, welche Polymerisate mit einpolymerisierten Silanolgruppen enthalten, die Nasshaftung von Bautenbeschichtungsmitteln auf verschiedensten Untergründen verbessert werden kann. Die EP-A 327376 beschreibt Polymerdispersionen auf Vinylesterbasis, wobei ethylenisch ungesattigte Alkoxysilanmonomere in der Weise copolymerisiert werden, dass ein Teil der Silanmonomere vor der Polymerisation vorgelegt wird. Die Polymerdispersionen werden zur Herstellung von Farben mit guten Nassabriebswerten empfohlen. Aus der WO-A 95/20626 ist bekannt, in Wasser redispergierbare Polymerpulver durch Zugabe von nicht copolymerisierbaren Organosiliciumverbindungen zu modifizieren.

EP 1 153 979 offenbart Vinylester-Copolymerisate von Vinylacetat für den Einsatz in silikatreichen bzw. carbonatreichen Farbrezepturen. EP 0 327 006 offenbart Anstrichmittel enthaltend Kunststoffdispersionscopolymerisate, enthaltend hydrolysierbare organische Siliciumverbindungen in wässrigen Zubereitungen mit einem pH Wert von 5,5-10. Vinylester Copolymerisate von Vinylacetat sind für den Einsatz in Farben mit einem pH Wert größer als 10 jedoch nicht geeignet, da sie bei hohen pH-Werten hydrolysieren. DE-A-195 37 935, DE-A-44 02 408, WO-A-2013/045259, DE-A-198 56 148 und DE-A-199 02 454 offenbaren alle Beschichtungsmassen und Klebstoffe auf Acrylatbasis. Überraschenderweise wurde gefunden, dass die erfindungsgemäßen wässrigen Polymerisatdispersionen, eine gute Nassabriebbeständigkeit bei gleichzeitig hoher Porosität aufweisen und insbesondere für den Einsatz in silikatreichen oder wasserglashaltigen Farbformulierungen mit einem pH Wert größer 10 geeignet sind.

Ein Gegenstand der Erfindung sind daher wässrige Polymerisatdispersionen zur Verbesserung der Nassscheuerbeständigkeit, erhältlich durch radikalische wässrige Emulsionspolymerisation einer Monomermischung, enthaltend
a) 30 bis 70 Gew.-Teilen wenigstens eines Monomers, dessen Homopolymerisat eine Glasübergangstemperatur T_{g} < 25°C aufweist,
b) 30 bis 70 Gew.-Teile wenigstens eines Monomers, dessen Homopolymerisat eine Glasübergangstemperatur T_{g} ≥ 25°C aufweist, sowie
c) 0,1-5 Gew.-Teile wenigstens einer Verbindung enthaltend stabilisierende Gruppen
d) 0,05 -5 Gew.-Teilen wenigstens eines copolymerisierbaren Monomers enthaltend eines oder mehrerer hydrolysierbare Silan-Monomere,
sowie gegebenenfalls weitere Monomere dadurch gekennzeichnet, dass die Monomere a) Mischungen von n-Butylacrylat und 2-Ethylhexylacrylat sind,

Bevorzugt weist das Polymer eine Mindestfilmbindetemperatur von unter 10 °C auf.

Die erfindungsgemäßen wässrigen Polymerisatdispersionen eignen sich als Bindemittelzusammensetzungen zur Formulierung von hochgefüllten Innenfarben mit einer Pigmentvolumenkonzentration >60.

Ein weiterer Gegenstand der Erfindung sind daher Beschichtungsmittel in Form einer wässrigen Zusammensetzung enthaltend
a) 0.01 bis 50 Gew.-%, bevorzugt 10 bis 20 Gew.-% einer erfindungsgemäßen Dispersion, wie zuvor definiert
b) 0 bis 30 Gew.-%, bevorzugt 2 bis 15 Gew.-% wenigstens eines anorganischen Pigments
c) 20 bis 70 Gew.-% anorganische Füllstoffe
d) 0.1 bis 10 Gew.-% übliche Hilfsmittel
e) gegebenenfalls 0.01-5 Gew-% mindestens ein stark basisches Agens mit dem der pH Wert auf mindestens 10 eingestellt werden kann, insbesondere mindestens ein wasserlösliches Silikat, bevorzugt eines Kaliwasserglases
sowie Wasser auf 100 Gew.-%.

Vorzugsweise enthält das Beschichtungsmittel 0,01-5 Gew.-% mindestens eines stark basischen Agens. Das basische Agens ist ausgewählt aus mindestens einem wasserlöslichem Silikat, bevorzugt mindestens einem Kaliwasserglases .

Der pH-Wert des Beschichtungsmittels ist vorzugsweise größer als 10.

Demzufolge betrifft ein weiterer Gegenstand der vorliegenden Erfindung die Verwendung einer wässrigen Polymerisatdispersion, wie zuvor definiert, als Bindemittelzusammensetzung, in Anstrichmitteln, bevorzugt für hochgefüllte Innenfarben, insbesondere bevorzugt für wasserglashaltige bzw. silikatreiche Farbformulierungen, sowie Anstrichmittel enthaltend die erfindungsgemäßen Bindemittelzusammensetzung.

Mit der Glasübergangstemperatur T_{g} ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt; sie wird nach dem DSC-Verfahren ermittelt (Differential Scanning Calorimetry, 20 K/min, midpoint). Die T_{g}-Werte für die Homopolymerisate der meisten Monomeren sind bekannt und z.B. in Ullmann's Ecyclopedia of Industrial Chemistry, VCH Weinheim, 1992, 5.Auflage, Vol. A21, S. 169 aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989.

Die in den Bindemitteln enthaltenen Polymerisate sind zu 30 bis 70 Gew.-Teilen, vorzugsweise 40 bis 60 Gew.-Teilen aus Monomeren a) aufgebaut. Monomere a) sind Mischungen aus n-Butylacrylat und 2-Ethylhexylacrylat.

Vorzugsweise werden Mischungen der Monomere a) eingesetzt, wobei das Verhältnis der jeweiligen Monomere 5:95 bis 95:5 beträgt.

Die Homopolymerisate der Monomere b) haben eine Glasübergangstemperatur > 25° C und bevorzugt > 80° C, beispielsweise Styrol, α-Methylstyrol, o- oder p-Vinyltoluol, Vinylchlorid, Vinylidenchlorid, Acrylnitril, Methacrylnitril, sowie (C₁-C₄)-Alkylester oder -Cycloalkylester der Methacrylsäure, beispielsweise Methylmethacrylat, Cyclohexylmethacrylat, Isobornylmethacrylat und tert.-Butylmethacrylat, vorzugsweise Styrol und Methylmethacrylat. Sie werden einzeln oder in Mischungen verwendet.

Die erfindungsgemäßen Bindemittelpolymerisate können weiterhin als Monomere c) Verbindungen enthaltend stabilisierende Gruppen enthalten. Bei diesen Gruppen handelt es sich vorzugsweise um Carboxylat-, Phosphonat- oder Sulfonatgruppen. Bevorzugte Monomere c) sind monoethylenisch ungesättigte Alkyl- oder Arylsulfonsäuren wie Vinylsulfonsäure, Methallylsulfonsäure, Vinylbenzolsulfonsäure, Acrylamidoethansulfonsäure, Acrylamidopropansulfonsäure, 2-Sulfoethyl(meth)acrylat, Sulfopropyl(meth)acrylat sowie α,β-ungesättigte C₃-C₆-Carbonsäuren, α,β-ungesättigte C₄-C₈-Dicarbonsäuren oder deren Anhydride wie Acrylsäure, Methacrylsäure, Crotonsäure, Fumarsäure, Maleinsäure, Maleinsäureanhydrid, Itaconsäure und Itaconsäureanhydrid sowie die Alkalimetall- oder Ammoniumsalze der genannten Monomere, insbesondere deren Natriumsalze .

Desweiteren können als Monomere c) die Amide und die Hydroxyalkylester der α,β-ungesättigten C₃-C₆-Carbonsäuren, besonders bevorzugt Acrylamid, Methacrylamid, 2-Hydroxyethylacrylat, 2-Hydroxyethylmethacrylat, 2-Hydroxypropyl(meth)acrylat oder 1,4-Butandiolmonoacrylat eingesetzt werden.

Weitere geeignete Monomere c) sind N-Vinylpyrolidon, N-(2-Methacryloyloxyethyl)ethylenharnstoff, N-(2-Acryloyloxyethyl)-ethylenharnstoff, 2-Acetoacetoxyethylacrylat, 2-Acetoacetoxyethylmethacrylat, Diacetonacrylamid.

Die Monomere c) können einzeln oder auch in Kombinationen von z.B. Säuren und Amiden eingesetzt werden.

Unter den Monomeren d) versteht man beispieilsweise Siloxangruppen enthaltende Monomere, wie die Vinyltrialkoxysilane, z.B. Vinyltrimethoxysilan, Vinyltriethoxysilan, Alkylvinyldialkoxysilane oder (Meth)acryloxyalkyltrialkoxysilane, z.B. (Meth)acryloxyethyltrimethoxysilan, (Meth)acryloxypropyltrimethoxysilan oder Gemische davon. Die genannten Monomere können in Mengen von 0,01 bis 5 Gew.-Teilen, bezogen auf 100 Gew.-Teile Monomere a) plus b) verwendet werden

Neben den genannten Monomeren a), b) und c) und d) können die erfindungsgemäßen Bindemittelpolymerisate auch weitere Monomere enthalten, um den jeweiligen Beschichtungsmassen eine höhere Festigkeit zu verleihen. Diese Monomere weisen normalerweise wenigstens eine Epoxygruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate, 1,6-Hexanglykoldiacrylat und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat, 1,6-Hexandiglycoldimethacrylat sowie Divinylbenzol, Vinylmethacrylat, Vinylacrylat, Allylmethacrylat, Allylacrylat, Diallylmaleat, Diallylfumarat, Cyclopentadienylacrylat, Triallylcyanurat oder Triallylisocyanurat.

Die als erfindungsgemäße Bindemittel verwendeten wässrigen Polymerisatdispersionen werden durch radikalische Emulsionspolymerisation der genannten Monomere a) bis d) in Gegenwart von 0,01 bis 0,5 Gew.-%, vorzugsweise 0,01 bis 0,4 Gew.-% und insbesondere 0,01 bis 0,3 Gew.-%, jeweils bezogen auf die Menge der Monomere a) und b), wenigstens eines radikalischen Polymerisationsinitiators hergestellt.

Als radikalische Polymerisationsinitiatoren kommen alle diejenigen in Betracht, die in der Lage sind, eine radikalische wässrige Emulsionspolymerisation auszulösen. Es kann sich dabei sowohl um Peroxide, Hydroperoxide, z.B. Alkalimetallperoxodisulfate als auch um Azoverbindungen handeln. Auch werden kombinierte Systeme verwendet, die aus wenigstens einem organischen Reduktionsmittel und wenigstens einem Peroxid und/oder Hydroperoxid zusammengesetzt sind, z.B. tert.-Butylhydroperoxid mit dem Natriumsalz der Hydroxymethansulfonsäure, Wasserstoffperoxid mit Ascorbinsäure oder Natriumperoxodisulfat mit Natriumdisulfit. Bevorzugte kombinierte Systeme enthalten darüber hinaus eine geringe Menge einer im Polymerisationsmedium löslichen Metallverbindung, deren metallische Komponente in mehreren Wertigkeitsstufen auftreten kann, z.B. Ascorbinsäure/Eisen(II)sulfat/Wasserstoffperoxid, wobei anstelle von Ascorbinsäure auch häufig das Natriumsalz der Hydroxymethansulfinsäure, Natriumsulfit, Natriumhydrogensulfit oder Natriumbisulfit und anstelle von Wasserstoffperoxid tert.-Butylhydroperoxid oder Alkaliperoxodisulfate und/oder Ammoniumperoxodisulfat verwendet werden. Anstelle eines wasserlöslichen Eisen(II)-Salzes wird häufig eine Kombination aus wasserlöslichen Eisen- und Vanadium-Salzen benutzt. Bevorzugte Initiatoren sind die Ammonium- oder Alkalimetallsalze von Peroxosulfaten oder Peroxodisulfaten, insbesondere Natrium- oder Kaliumperoxodisulfat.

Für die Herstellung der erfindungsgemäßen Bindemittelpolymerisate wird gegebenenfalls neben den für eine Emulsionspolymerisation üblichen oberflächenaktiven Substanzen wenigstens ein nichtionischer Emulgator in Mengen von vorzugsweise 0,5 bis 10 Gew.-%, insbesondere 1 bis 8 Gew.-% und besonders bevorzugt 2 bis 4 Gew.-%, jeweils bezogen auf die Gesamtmonomermenge verwendet. Brauchbare nichtionische Emulgatoren sind aromatische oder aliphatische nichtionische Emulgatoren, beispielsweise ethoxylierte Mono-, Di- und Trialkylphenole (EO-Grad: 3 bis 50, Alkylrest: C₄-C₉), Ethoxylate langkettiger Alkohole (EO-Grad: 3 bis 50, Alkylrest: C₈-C₃₆) sowie Polyethylenoxid/Polypropylenoxid-Blockcopolymere. Bevorzugt werden Ethoxylate langkettiger Alkanole (Alkylrest C₁₀-C₂₂, mittlerer Ethoxylierungsgrad 10 bis 50) und darunter besonders bevorzugt solche mit einem linearen C₁₂-C₁₈-Alkylrest und einem mittleren Ethoxylierungsgrad 10 bis 50 als alleinige, nichtionische Emulgatoren verwendet.

Weitere gebräuchliche Emulgatoren sind vorzugsweise anionischer Natur. Hierzu zählen Alkali- und Ammoniumsalze von Alkylsulfaten (Alkylrest: C₈-C₁₂), von Schwefelsäurehalbestern ethoxylierter Alkanole (EO-Grad: 2 bis 50, Alkylrest: C₁₂ bis C₁₈) und ethoxylierter Alkylphenole (EO-Grad: 3 bis 50, Alkylrest: C₄-C₉), von Alkylsulfonsäuren (Alkylrest: C₁₂-C₁₈) und von Alkylarylsulfonsäuren (Alkylrest: C₉ bis C₁₈).

Bevorzugte anionische grenzflächenaktive Substanzen sind auch Verbindungen der folgenden allgemeinen Formel 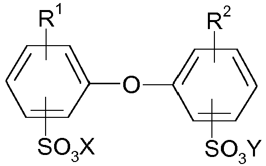 worin R¹ und R² Wasserstoff oder C₄-C₂₄-Alkyl bedeuten und nicht gleichzeitig Wasserstoff sind, und X und Y Alkalimetallionen und/oder Ammoniumionen sein können. In der Formel I bedeuten R¹ und R² bevorzugt lineare oder verzweigte Alkylreste mit 6 bis 18 C-Atomen oder Wasserstoff, und insbesondere mit 6, 12 und 16 C-Atomen, wobei R¹ und R² nicht beide gleichzeitig Wasserstoff sind. X und Y sind bevorzugt Natrium, Kalium oder Ammonium, wobei Natrium besonders bevorzugt ist. Besonders vorteilhaft sind Verbindungen I, in denen X und Y Natrium, R¹ ein verzweigter Alkylrest mit 12 C-Atomen und R² Wasserstoff oder gleich R¹ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen sind allgemein bekannt, z.B. aus der US-A 4,269,749, und im Handel erhältlich.

Weitere geeignete Emulgatoren finden sich beispielsweise in Houben-Weyl, Methoden der organischen Chemie, Band 14/1, Makromolekulare Stoffe, Georg Thieme Verlag, Stuttgart, 1961, S. 192 bis 208.

Geeignete Emulgatoren sind kommerziell erhältlich, beispielsweise unter den Handelsbezeichnungen Dowfax®2 A1, Emulan® NP 50, Dextrol® OC 50, Emulgator 825, Emulgator 825 S, Emulan® OG, Texapon® NSO, Nekanil® 904 S, Lumiten® I-RA, Lumiten® I-SC, Lumiten® E 3065, Disponil® FES 77, Lutensol® AT 18, Steinapol® VSL, Emulphor® NPS 25.

Darüber hinaus können geeignete Schutzkolloide, wie beispielsweise Polyvinylalkohole, Cellulosederivate oder Vinylpyrolidon enthaltende Copolymerisate eingesetzt werden. Eine ausführliche Beschreibung weiterer geeigneter Schutzkolloide findet sich in Houben-Weyl, Methoden der Organischen Chemie, Bd. 14/1, Makromolekulare Stoffe, Georg-Thieme-Verlag, Stuttgart, 1961, S. 411-420. Die Gesamtmenge an grenzflächenaktiven Substanzen (fest) macht üblicherweise bis zu 30 Gew.-%, vorzugsweise 0,3 bis 10 Gew.-% und besonders bevorzugt 0,5 bis 5 Gew.-%, bezogen auf die zu polymerisierenden Monomere aus.
Das Molekulargewicht der Polymerisate kann durch Zugabe geringer Mengen, in der Regel bis zu 2 Gew.-%, bezogen auf die zu polymerisierenden Monomere, einer oder mehrerer, das Molekulargewicht regelnder Substanzen, z.B. organische Thioverbindungen oder Allylalkohole, eingestellt werden. Bevorzugt werden jedoch solche Polymerisate, die in Abwesenheit solcher Verbindungen hergestellt wurden.

Die Emulsionspolymerisation kann sowohl kontinuierlich als auch nach der Batch-Fahrweise, vorzugsweise nach einem halbkontinuierlichen Verfahren erfolgen. Dabei können die zu polymerisierenden Monomere kontinuierlich, einschließlich Stufen- oder Gradientenfahrweise, dem Polymerisationsansatz zugefügt werden. Bevorzugt ist ein Zulaufverfahren mit kurzen Zulaufzeiten, d.h. die Monomere werden, vorzugsweise als wässrige Emulsion, dem Reaktionsansatz innerhalb von 1 bis 4 Stunden, vorzugsweise innerhalb von 1,5 bis 3 Stunden zudosiert.

Neben der saatfreien Herstellungsweise kann zur Einstellung der Polymerteilchengröße die Emulsionspolymerisation nach dem Saatlatex-Verfahren oder in Gegenwart eines in situ hergestellten Saatlatex erfolgen. Verfahren hierzu sind bekannt und können dem Stand der Technik entnommen werden (siehe EP-B 40 419 sowie 'Encyclopedia of Polymer Science and Technology', Vol. 5, John Wiley & Sons Inc., New York, 1966, S. 847).

So empfiehlt der Stand der Technik, beim Zulaufverfahren eine definierte feinteilige Saat-Polymerisatdispersion im Polymerisationsgefäß vorzulegen und dann die Monomere in Gegenwart der Saat zu polymerisieren. Hierbei wirken die Saat-Polymerisatteilchen als 'Polymerisationskeime' und entkoppeln die Polymersatteilchenbildung und das Polymerisatteilchenwachstum. Während der Emulsionspolymerisation kann weitere Saatdispersion zugegeben werden. Hierdurch werden breite Größenverteilungen der Polymerisatteilchen erreicht, die insbesondere bei Polymerdispersionen mit hohem Feststoffgehalt oftmals erwünscht sind (vgl. DE-A 42 13 965). Anstelle der Zugabe eines definierten Saatlatex kann dieser auch in situ erzeugt werden. Hierzu wird beispielsweise ein Teil der Monomere und des Initiators zusammen mit Emulgator vorgelegt und auf Reaktionstemperatur erwärmt, wobei ein relativ feinteiliger Latex entsteht. Anschließend wird im gleichen Polymerisationsgefäß die eigentliche Polymerisation nach dem Zulaufverfahren durchgeführt (siehe auch DE-A 42 13 965).

Die Art und Weise, wie der Initiator der Emulsionspolymerisation zudosiert ist, ist nicht kritisch. Der Initiator kann sowohl vollständig im Polymerisationsgefäß vorgelegt oder aber, nach Maßgabe seines Verbrauchs, im Verlauf der Emulsionspolymerisation kontinuierlich oder stufenweise zugesetzt werden. Die Vorgehensweise hängt sowohl von der chemischen Natur des Initiators als auch von der Polymerisationstemperatur ab und kann vom Fachmann je nach Bedarf gewählt werden. Bevorzugt wird eine kontinuierliche oder stufenweise Zudosierung zum Reaktionsansatz.

Polymerisationsdruck und Polymerisationstemperatur sind gleichfalls von untergeordneter Bedeutung. Im Allgemeinen arbeitet man bei Temperaturen zwischen Raumtemperatur und 120°C, vorzugsweise bei Temperaturen von 50 bis 95°C und besonders bevorzugt zwischen 70 und 90°C.

Im Anschluss an die eigentliche Polymerisationsreaktion ist es in der Regel erforderlich, die erfindungsgemäßen wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden.

Die Absenkung der Restmonomere kann weiterhin chemisch durch radikalische Nachpolymerisation, insbesondere unter Einwirkung von Redoxinitiatorsystemen, wie sie z.B. in der DE-A 44 35 423, DE-A 44 19 518 sowie in der DE-A 44 35 422 aufgeführt sind, erfolgen. Als Oxidationsmittel zur redoxinitiierten Nachpolymerisation eignen sich insbesondere Wasserstoffperoxid, tert.-Butylhydroperoxid, Cumolhydroperoxid oder Alkaliperoxodisulfate. Geeignete Reduktionsmittel sind Natriumdisulfit, Natriumhydrogensulfit, Natriumdithionit, Natriumhydroxymethansulfinat, Formamidinsulfinsäure, Acetonbisulfit (= Natriumhydrogensulfit-Additionsproduckt an Aceton), Ascorbinsäure bzw. reduzierend wirkende Zuckerverbindungen, oder wasserlösliche Mercaptane, wie Mercaptoethanol. Die Nachpolymerisation mit dem Redoxinitiatorsystem wird im Temperaturbereich von 10 bis 100°C, vorzugsweise bei 20 bis 90°C durchgeführt. Die Redoxpartner können der Dispersion unabhängig voneinander vollständig, portionsweise bzw. kontinuierlich über einen Zeitraum von 10 Minuten bis 4 Stunden zugegeben werden. Zur Verbesserung der Nachpolymerisationswirkung der Redoxinitiatorsysteme können der Dispersion auch lösliche Salze von Metallen wechselnder Wertigkeit, wie Eisen-, Kupfer oder Vanadiumsalze, zugesetzt werden. Häufig werden auch Komplexbildner zugegeben, die die Metallsalze unter den Reaktionsbedingungen in Lösung halten.

Die Polymerisatdispersionen werden abschliessend mit einer Base neutralisiert, wie Alkali- oder Erdalkalimetallhydroxyden, Erdalkalimetalloxyden oder flüchtige oder nichtflüchtige Aminen. Zu den nichtflüchtigen Aminen zählen insbesondere ethoxylierte Diamine oder Polyamine, wie sie z.B. unter dem Namen Jeffamine® (Texaco Chemical Co.) kommerziell erhältlich sind.

Die erfindungsgemäßen Bindemittelpolymerisate weisen in der Regel Mindestfilmbildetemperaturen unterhalb 10°C, bevorzugt unterhalb 8°C, und besonders bevorzugt < 5°C auf. Die über Lichtstreuung ermittelte mittlere Teilchengröße der in den Bindemitteldispersionen enthaltenen Polymerisatteilchen liegt vorzugsweise im Bereich von 50 bis 300 nm, besonders bevorzugt im Bereich von 50 bis 200 nm.

Die Lichtdurchlässigkeit (s.u.) der Dispersionen liegt in der Regel im Bereich von 40 bis 95 %, vorzugsweise im Bereich von 50 bis 95 %. Sie korreliert über weite Bereiche mit der Größe der dispergierten Teilchen, d.h. je größer der LD-Wert (Lichtdurchlässigkeit einer 0,01 Gew.-%igen Probe), desto geringer ist der Durchmesser der dispergierten Teilchen.

Die in den Anstrichmitteln zum Einsatz kommenden erfindungsgemäßen Bindemittelzusammensetzungen enthalten Polymere (P), deren Glasübergangstemperaturen T_{g} typischerweise im Bereich von -15°C bis 50°C, vorzugsweise im Bereich von -10°C bis 25°C und insbesondere im Bereich von -5°C bis 10°C liegen.

Die Anstrichmittelformulierungen können neben den Bindemittelzusammensetzungen weitere Zusatzstoffe enthalten, wie sie in Anstrichmitteln auf Basis wässriger Polymerdispersionen üblich sind. Hierzu zählen Pigmente, Füllstoffe, weitere Hilfsmittel und gegebenenfalls zusätzliche filmbildende Polymere.

Geeignete Pigmente sind beispielsweise anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Geeignet sind auch synthetische Weißpigmente mit Lufteinschlüssen zur Erhöhung der Lichtstreuung, wie die Rhopaque®-Dispersionen.

Geeignete Füllstoffe sind z. B. Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum.

Feinteilige Füllstoffe können auch zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Als weitere Komponente werden zur Herstellung von wasserglashaltigen Farben bevorzugt wasserlösliche Basen eingesetzt werden, mit denen der pH Wert der Farbfomulierung auf einen pH Wert größer gleich 10 eingestellt werden kann. Beispiele hierfür sind Alkalihydroxide wie Lithium- Kalium oder Natriumhydroxid, Puffersysteme mit Pufferbereichen von mindestens 10 und besonders bevorzugt wasserlösliche Silikate. Hierbei handelt es sich typischerweise um ein wasserlösliches Alkalisilikat, beispielsweise Lithium- Natrium- oder bevorzugt Kaliumsilikat. Der Anteil dieser Komponente im erfindungsgemäßen Beschichtungsmittel liegt zwischen 0,01 und 5 Gew.-%, bezogen auf den Gesamtfeststoffgehalt.

Zu den üblichen Hilfsmitteln zählen, neben den bei der Polymerisation eingesetzten Emulgatoren, auch Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Weitere geeignete Hilfsmittel sind Verlaufsmittel, Entschäumer, Biozide und Verdicker. Geeignete Verdicker sind z. B. Assoziativverdicker, wie Polyurethanverdicker. Die Menge des Verdickers beträgt vorzugsweise weniger als 1 Gew.-%, besonders bevorzugt weniger als 0,6 Gew.-%, bezogen auf den Feststoffgehalt des Anstrichmittels.

Die erfindungsgemäßen Anstrichmittel weisen bevorzugt eine Pigemntvolumenkonzentration größer als 60 auf.

Die aus den erfindungsgemäßen Dispersionen hergestellten Anstriche zeichnen sich dadurch aus, dass die gute Naßabriebbeständigkeit der Beschichtung bei einer Erhöhung der Porösität zum Beispiel durch den Einsatz von Kaliumsilikat zur Herstellung wasserglashaltiger Farben mit einem pH-Wert größer als 10 erhalten bleibt.

Die im Folgenden angegebenen Beispiele sollen die Erfindung erläutern, ohne sie jedoch einzuschränken.

### Beispiele

### Analytik

Die Teilchengrösse (Z-Mittelwert) der Polymerisatteilchen wurde durch dynamische Lichtstreuung an einer 0,01 gew.-%igen Dispersion bei 23°C mittels eines Autosizer IIc der Fa. Malvern Instruments, England, ermittelt. Angegeben wird der mittlere Durchmesser der Kumulantenauswertung (cumulant z-average) der gemessenen Autokorrelationsfunktion.

Die Lichtdurchlässigkeit (LD-Wert) wurde an einer 0,01 Gew.-%igen Dispersion bei einer Schichtdicke von 25 mm mit weißem Licht in einem handelsüblichen Photometer ermittelt. Gemessen wird relativ zu Wasser, dem ein LD-Wert von 100 % zugeordnet wird.

Die Bestimmung der Mindestfilmbildetemperatur (MFT) erfolgte in Anlehnung an Ullmanns Enzyklopädie der technischen Chemie, 4. Aufl., Bd. 19, Verlag Chemie, Weinheim (1980), S. 17. Als Meßgerät diente eine Filmbildebank (Metallplatte, an die ein Temperaturgradient angelegt wird). Die Verfilmung erfolgte bei einer Naßschichtdicke von 1 mm. Als Mindestfilmbildetemperatur wird die Temperatur angegeben, bei der der Film beginnt, rissig zu werden.

Die Bestimmung der Naßabriebbeständigkeit erfolgte gemäß EN ISO 11998:2006. Dazu wurde die Abtragung der Beschichtung nach 28 Tagen Lagerung (28d) über den Massenverlust des Farbfilms bestimmt. Aus der Farbdichte, der gescheuerten Fläche und dem Massenverlust des Farbfilms wurde dann der Farbabtrag in µm errechnet.

Die Bestimmung des intrinsischen Porenvolumens, das ein Maß für die offene Porosität der Beschichtung darstellt erfolgte gemäß DIN 66 133 (Juni 1993) Das Verfahren beruht auf der Messung eines eingepressten Quecksilbervolumens in eine definierte Prüfschicht in Abhängigkeit von dem angewendeten Druck. Als Meßapparatur dient ein Quecksilber-Porosimeter - aus der Längenänderung der enthaltenen Quecksilbersäule lässt sich in Abhängigkeit von dem Druck die Porenverteilung berechnen.

### Vorschrift zur Herstellung der Bindemittelpolymerisate

### Vergleichsbeispiel

In einem 2 I-Glasgefäß mit Ankerrührer, Heiz- und Kühlvorrichtungen sowie verschiedenen Zuläufen wurden bei Raumtemperatur und Atmosphärendruck (1 atm =̂ 1,013 bar absolut)

| | |
|---|---|
| 193,69g | entionisiertes Wasser vorgelegt und unter Rühren (150 Upm) auf eine Innentemperatur von 85 °C aufgeheizt. |

Während des Aufheizens vor Erreichen der 85°C wird bereits 10,33 g eines Polystyrolsaatlatex mit einem Feststoffgehalt von 30% und einem Durchmesser von 29 nm vorgelegt.

### Folgende Zuläufe werden angesetzt:

### Zulauf 1:

| | |
|---|---|
| 184,2 g | entionisiertes Wasser |
| 9,66 g | 45% Lösung eines Dodecyldiphenyletherdisulfonsäurenatriumsalzes in Wasser |
| 75,63 g | 20% Lösung eines verzweigten Oxoalkoholpolyethoxylats |
| 28,97 g | 15% Lösung eines Natriumlaurylsulfats in Wasser |
| 16,21 g | Acrylamid |
| 1,62 g | Acrylsäure |
| 324,18 g | n-Butylacrylat |
| 216,10 g | Styrol |

### Zulauf 2:

| | |
|---|---|
| 15,40 g | Natriumperoxodisulfat |

Von Zulauf 2 werden 2,9 g auf einmal vorab zugegeben und 5' eingerührt. Zulauf 1 und Zulauf 2 werden gleichzeitig gestartet und in 135 Minuten unter Rühren bei 85°C zugegeben. Danach wird noch 40 Minuten bei 85°C nachpolymerisiert und dann 10,8 g einer 10% Lösung von t-Butylhydroperoxid in Wasser zugegeben. Danach werden 14,4 g einer 13% Lösung von Acetonbisulfit in Wasser über einen Zeitraum von 60' zugegeben. Das Reaktionsprodukt wird mit Natronlauge (10%) auf pH 8 gestellt. Es wird eine Dispersion mit einer Teilchengröße von 175 nm und einem Feststoffgehalt von 50 % erhalten.

### Beispiel 1:

In einem 2 I-Glasgefäß mit Ankerrührer, Heiz- und Kühlvorrichtungen sowie verschiedenen Zuläufen wurden bei Raumtemperatur und Atmosphärendruck (1 atm =̂ 1,013 bar absolut)

| | |
|---|---|
| 160,40 | g entionisiertes Wasser vorgelegt und unter Rühren (150 Upm) auf eine Innentemperatur von 85 °C aufgeheizt. |

Während des Aufheizens vor Erreichen der 85°C wird bereits 8,33 g eines Polystyrolsaatlatex mit einem Feststoffgehalt von 30% und einem Durchmesser von 29 nm vorgelegt.

### Folgende Zuläufe werden angesetzt:

### Zulauf 1:

| | |
|---|---|
| 189,79 g | entionisiertes Wasser |
| 14,84 g | 32% Lösung eines Na-Fettalkoholsulfats in Wasser |
| 16,96 g | 28% Lösung eines Natriumlaurylpolyethoxysulfats in Wasser |
| 21,25 g | 20% Lösung eines Fettalkoholethoxylats in Wasser |
| 7,5 g | Acrylsäure |
| 198,8 g | n-Butylacrylat |
| 78,60 g | 2-Ethylhexylacrylat |
| 214,1 g | Styrol |
| 1,0 g | 3-Methacryloxypropyltrimethoxysilan |

### Zulauf 2:

| | |
|---|---|
| 28,57 g | Natriumperoxodisulfat |

Von Zulauf 2 werden 2,9 g auf einmal vorab zugegeben und 4' eingerührt. Gleichzeitig werden 11 g von Zulauf 1 in 5 Minuten zugegeben. Zulauf 1 und Zulauf 2 werden gleichzeitig gestartet und in 120 Minuten unter Rühren bei 85°C zugegeben. Danach wird noch 30 Minuten bei 85°C nachpolymerisiert und dann 15 g einer 10% Lösung von t-Butylhydroperoxid in Wasser sowie 19 g einer 13,1% Lösung von Acetonbisulfit in Wasser zugegeben. Das Reaktionsprodukt wird mit Natronlauge (10%) auf pH 8 gestellt. Es wird eine Dispersion mit einer Teilchengröße von 170 nm und einem Feststoffgehalt von 50 % erhalten.

### Beispiel 2

In einem 2 I-Glasgefäß mit Ankerrührer, Heiz- und Kühlvorrichtungen sowie verschiedenen Zuläufen wurden bei Raumtemperatur und Atmosphärendruck (1 atm =̂ 1,013 bar absolut)

| | |
|---|---|
| 160,40 | g entionisiertes Wasser vorgelegt und unter Rühren (150 Upm) auf eine Innentemperatur von 85 °C aufgeheizt. |

Während des Aufheizens vor Erreichen der 85°C wird bereits 8,33 g eines Polystyrolsaatlatex mit einem Feststoffgehalt von 30% und einem Durchmesser von 29 nm vorgelegt.

### Folgende Zuläufe werden angesetzt:

### Zulauf 1:

| | |
|---|---|
| 202,8 g | entionisiertes Wasser |
| 13,28 g | 32% Lösung eines Na-Fettalkoholsulfats in Wasser |
| 21,11 g | 45% Lösung eines Dodecyldiphenyletherdisulfonsäurenatriumsalzes in Wasser |
| 5,00 g | 20% Lösung eines linearen Fettalkoholpolyethoxylats in Wasser |
| 7,5 g | Acrylsäure |
| 198,8 g | n-Butylacrylat |
| 78,60 g | 2-Ethylhexylacrylat |
| 214,1 g | Styrol |
| 1,00 g | Vinyltriethoxysilan |

### Zulauf 2:

| | |
|---|---|
| 28,57 g | Natriumperoxodisulfat |

Von Zulauf 2 werden 2,9 g auf einmal vorab zugegeben und 4' eingerührt. Gleichzeitig werden 11g von Zulauf 1 in 5 Minuten zugegeben. Zulauf 1 und Zulauf 2 werden gleichzeitig gestartet, Zulauf 1 innerhalb von 115 Minuten und Zulauf 2 innerhalb von 145 Minuten zugegeben. Danach wird noch 30 Minuten bei 85°C nachpolymerisiert und dann 15 g einer 10% Lösung von t-Butylhydroperoxid in Wasser sowie 19 g einer 13,1% Lösung von Acetonbisulfit in Wasser zugegeben. Das Reaktionsprodukt wird mit Natronlauge (10%) auf pH 8 gestellt. Es wird eine Dispersion mit einer Teilchengröße von 170 nm und einem Feststoffgehalt von 50 % erhalten.

### Herstellung der Formulierungen für Beschichtungen

### Farbformulierung A (ohne Wasserglas - Kaliumsilikat):

| | | |
|---|---|---|
| VE - Wasser | | 350,0 |
| Tylose® MH 4000 (**Shin Etsu** ) | | 5,0 |
| Kalilauge 20%ig | | 1,0 |
| Dispex ® AA4135 (BASF) | | 3,0 |
| Kronos 2300 (Titandioxid Kronos) | | 80,0 |
| Socal® P2 (Solvay) | | 120,0 |
| Omyacarb™ Extra (Omya) | | 100,0 |
| Omyacarb™ 5 GU (Omya) | | 50,0 |
| Finntalc® M15 (Mondo Minerals) | | 100,0 |
| Sipernat® 820 A (Evonik) | | 20,0 |
| Celite® 281 (Imerys) | | 15,0 |
| | | |
| Parmetol® A26 (Schülke & Mayr) | | 4,0 |
| Byk® 037 (Byk) | | 4,0 |
| Dipsersion | 50,0% | 120,0 |
| VE - Wasser | | 28,0 |
| | | 1000,0 |

### Farbformulierung B (mit Wasserglas - Kaliumsilikat):

| | | |
|---|---|---|
| Wasser | | 342 |
| Tylose® MH 4000 (Shin Etsu) | | 4 |
| Kalilauge, 20%ig | | 1 |
| Pigmentverteiler® NL | | 3 |
| Betolin® Q 40 (Woellner) | | 0,5 |
| Byk® 037 (Byk) | | 2 |
| Titandioxid Kronos 2300 (Kronos) | | 80 |
| Omyacarb™ 5 GU (Omya) | | 50 |
| Finntalc® M 15 (Mondo Minerals) | | 100 |
| Omyacarb™ Extra (Omya9 | | 100 |
| Celite® 281 (Imerys) | | 15 |
| Sipernat® 820 A (Evonik) | | 20 |
| Socal ®P 2 (Solvay) | | 120 |
| Byk® 037 (Byk9 | | 2 |
| Dispersion | 50,0% | 119,8 |
| Wasserglas Trasol® KW-N | 28,0% | 35,3 |
| Kalilauge, 20%ig | | 5 |
| | | 1000 |

Es wurden Farbformulierungen gemäß der angeführten Zusammensetzungen hergestellt. Die getrockneten Farbfilme wurden nach einer Lagerung von 28d wie oben beschrieben im Hinblick auf Nassscheuerfestigkeit und Porenvolumen charakterisiert.

### Farben 5 und 6

Die Farben wurden mit der im Vergleichsbeispiel offenbarten Polymerzusammensetzung gemäß Formulierung A (ohne Wasserglas)(Farbe 5) und B (mit Wasserglas)(Farbe 6) formuliert. Im Vergleich weist Farbe 6 ein Porenvolumen von 129% der Farbe 5 auf Die Naßscheuerbeständigkeit, nimmt hier, wie erwartet, mit steigender Porösität ab. Die Nassscheuerbeständigkeiten sind der Tabelle zu entnehmen.

### Farbe 7 und 8

Die Farben wurden mit der unter Beispiel 1 offenbarten Polymerzusammensetzung gemäß Formulierung A (Farbe 7) und B (Farbe 8) formuliert. Im Vergleich weist Farbe 7 ein Porenvolumen von 136% der Farbe 8 auf, während die Nassscheuerfestigkeit verbessert wird (siehe Tabelle)

| Probe | Nassscheuerfestigkeit gemäß ISO 11998 |
|---|---|
| Farbe 5 | 33 µm |
| Farbe 6 | 57 µm |
| Farbe 7 | 8 µm |
| Farbe 8 | 6 µm |

## Patentansprüche

1. Wässrige Polymerisatdispersionen, zur Verbesserung der Naßscheuerbeständigkeit erhältlich durch radikalische wässrige Emulsionspolymerisation einer Monomermischung, enthaltend
a) 30 bis 70 Gew.-Teilen wenigstens eines Monomers, dessen Homopolymerisat eine Glasübergangstemperatur Tg < 25oC aufweist,
b) 30 bis 70 Gew.-Teile wenigstens eines Monomers, dessen Homopolymerisat eine Glasübergangstemperatur Tg ≥ 25oC aufweist, sowie
c) 0,1-5 Gew.-Teile wenigstens einer Verbindung enthaltend stabilisierende Gruppen
d) 0,05 -5 Gew.-Teilen wenigstens eines copolymerisierbaren Monomers enthaltend eines oder mehrerer hydrolysierbare Silan-Monomere,
**dadurch gekennzeichnet, dass** die Monomere a) Mischungen von n-Butylacrylat und 2-Ethylhexylacrylat sind,
sowie gegebenenfalls weitere Monomere.

2. Wässrige Polymerisatdispersion gemäß Anspruch 1, **dadurch gekennzeichnet, dass** die Monomere b) ausgewählt sind aus der Gruppe Styrol, α-Methylstyrol, o- oder p-Vinyl- toluol, Vinylchlorid, Vinylidenchlorid, Acrylnitril, Methacrylnitril, sowie (C1-C4)-Alkylester oder -Cycloalkylester der Methacrylsäure, beispielsweise Methylmethacrylat, Cyclohexylmethacrylat, Isobornylmethacrylat und tert.-Butylmethacrylat oder Mischungen davon.

3. Wässrige Polymerisatdispersion gemäß einem der Ansprüche 1 oder 2, **dadurch gekennzeichnet, dass** als Monomer b) Styrol eingesetzt wird.

4. Wässrige Polymerisatdispersion gemäß einem der Ansprüche 1 bis 3, **dadurch gekennzeichnet, dass** die Mindestfilmbildetemperatur der Polymerisatdispersion ≤ 10 °C ist.

5. Verwendung der wässrigen Polymerisatdispersionen gemäß einem der Ansprüche 1 bis 4 in Beschichtungsmitteln.

6. Verwendung der wässrigen Polymerisatdispersion gemäß Anspruch 5, **dadurch gekennzeichnet, dass** es sich bei dem Beschichtungsmittel um ein Anstrichmittel handelt.

7. Verwendung der wässrigen Polymerisatdispersion gemäß Anspruch 6, **dadurch gekennzeichnet, dass** es sich bei dem Anstrichmittel um eine silikatreiche oder wasserglashaltige Farbe handelt.

8. Beschichtungsmittel in Form einer wässrigen Zusammensetzung enthaltend
a) 0.01 bis 50 Gew.-%, bevorzugt 10 bis 20 Gew.-% einer wässrigen Polymerisatdispersion, gemäß einem der Ansprüche 1 bis 4
b) 0 bis 30 Gew.-%, bevorzugt 2 bis 15 Gew.-% wenigstens eines anorganischen Pigments
c) 20 bis 70 Gew.-% anorganische Füllstoffe
d) 0.1 bis 10 Gew.-% übliche Hilfsmittel
sowie Wasser auf 100 Gew.-%.

9. Beschichtungsmittel in Form einer wässrigen Zusammensetzung enthaltend
a) 0.01 bis 50 Gew.-%, bevorzugt 10 bis 20 Gew.-% einer wässrigen Polymerisatdispersion, gemäß einem der Ansprüche 1 bis 4
b) 0 bis 30 Gew.-%, bevorzugt 2 bis 15 Gew.-% wenigstens eines anorganischen Pigments
c) 20 bis 70 Gew.-% anorganische Füllstoffe
d) 0.1 bis 10 Gew.-% übliche Hilfsmittel, sowie
e) 0.01-5 Gew-% mindestens ein stark basisches Agens mit dem der pH Wert auf mindestens 10 eingestellt werden kann
sowie Wasser auf 100 Gew.-%.

10. Beschichtungsmittel gemäß Anspruch 9, **dadurch gekennzeichnet, dass**, das basische Agens mindestens ein wasserlösliches Silikat ist.

11. Beschichtungsmittel gemäß Anspruch 9 oder 10, **dadurch gekennzeichnet, dass**, das basische Agens mindestens ein Kaliwasserglas ist.

12. Beschichtungsmittel gemäß einem der Ansprüche 9 bis 11, **dadurch gekennzeichnet, dass** der pH-Wert des Beschichtungsmittels > 10 ist.

13. Anstrichmittel enthaltend eine wässrige Polymerisatdispersion gemäß einem der Ansprüche 1 bis 4 als Bindemittel.

14. Wasserglashaltiges Anstrichmittel, enthaltend eine wässrige Polymerisatdispersiongemäß einem der Ansprüche 1 bis 4 als Bindemittel.

15. Verwendung der wässrigen Polymersatdispersion gemäß einem der Ansprüche 1 bis 4 in silikatreichen wasserglashaltigen Formulierungen zur Verbesserung der Naßscheuerbeständigkeit.

## Claims

1. An aqueous polymer dispersion for improving the wet scrub resistance, obtainable by radical aqueous emulsion polymerization of a monomer mixture comprising
a) 30 to 70 parts by weight of at least one monomer whose homopolymer has a glass transition temperature T_{g} < 25°C,
b) 30 to 70 parts by weight of at least one monomer whose homopolymer has a glass transition temperature T_{g} ≥ 25°C, and
c) 0.1-5 parts by weight of at least one compound comprising stabilizing groups,
d) 0.05-5 parts by weight of at least one copolymerizable monomer, comprising one or more hydrolyzable silane monomers,
wherein the monomers a) are mixtures of n-butyl acrylate and 2-ethylhexyl acrylate,
and optionally further monomers.

2. The aqueous polymer dispersion according to claim 1, wherein the monomers b) are selected from the group of styrene, α-methylstyrene, o- or p-vinyltoluene, vinyl chloride, vinylidene chloride, acrylonitrile, methacrylonitrile, and also (C₁-C₄)-alkyl esters or -cycloalkyl esters of methacrylic acid, as for example methyl methacrylate, cyclohexyl methacrylate, isobornyl methacrylate, and tert-butyl methacrylate, or mixtures thereof.

3. The aqueous polymer dispersion according to either of claims 1 and 2, wherein styrene is used as monomer b).

4. The aqueous polymer dispersion according to any of claims 1 to 3, wherein the minimum film-forming temperature of the polymer dispersion is ≤ 10°C.

5. The use of the aqueous polymer dispersion according to any of claims 1 to 4 in a coating material.

6. The use of the aqueous polymer dispersion according to claim 5, wherein the coating material is a paint material.

7. The use of the aqueous polymer dispersion according to claim 6, wherein the paint material is a silicate-rich or waterglass-containing paint.

8. A coating material in the form of an aqueous composition comprising
a) 0.01 to 50 wt%, preferably 10 to 20 wt%, of an aqueous polymer dispersion according to any of claims 1 to 4
b) 0 to 30 wt%, preferably 2 to 15 wt%, of at least one inorganic pigment
c) 20 to 70 wt% of inorganic fillers
d) 0.1 to 10 wt% of customary auxiliaries
and also water to 100 wt%.

9. A coating material in the form of an aqueous composition comprising
a) 0.01 to 50 wt%, preferably 10 to 20 wt%, of an aqueous polymer dispersion according to any of claims 1 to 4
b) 0 to 30 wt%, preferably 2 to 15 wt%, of at least one inorganic pigment
c) 20 to 70 wt% of inorganic fillers
d) 0.1 to 10 wt% of customary auxiliaries, and also
e) 0.01-5 wt% of at least one strongly basic agent with which the pH can be adjusted to not less than 10
and also water to 100 wt%.

10. The coating material according to claim 9, wherein the basic agent is at least one water-soluble silicate.

11. The coating material according to claim 9 or 10, wherein the basic agent is at least one potassium waterglass.

12. The coating material according to any of claims 9 to 11, wherein the pH of the coating material is > 10.

13. A paint material comprising an aqueous polymer dispersion according to any of claims 1 to 4 as binder.

14. A waterglass-containing paint material comprising an aqueous polymer dispersion according to any of claims 1 to 4 as binder.

15. The use of the aqueous polymer dispersion according to any of claims 1 to 4 in a silicate-rich, waterglass-containing formulation, for improving the wet scrub resistance.

## Revendications

1. Dispersions aqueuses de produit polymérisé pour l'amélioration de la résistance à l'abrasion humide, pouvant être obtenues par polymérisation en émulsion aqueuse par voie radicalaire d'un mélange de monomères, contenant
a) 30 à 70 parties en poids d'au moins un monomère dont l'homopolymère présente une température de transition vitreuse T_{g} < 25°C,
b) 30 à 70 parties en poids d'au moins un monomère dont l'homopolymère présente une température de transition vitreuse T_{g} ≥ 25°C, ainsi que
c) 0,1-5 parties en poids d'au moins un composé contenant des groupes stabilisants
d) 0,05-5 parties en poids d'au moins un monomère copolymérisable contenant un ou plusieurs monomères hydrolysables de type silane
**caractérisées en ce que** les monomères a) sont des mélanges d'acrylate de n-butyle et d'acrylate de 2-éthylhexyle ainsi que le cas échéant d'autres monomères.

2. Dispersion aqueuse de produit polymérisé selon la revendication 1, **caractérisée en ce que** les monomères b) sont choisis dans le groupe formé par le styrène, l'α-méthylstyrène, l'o-vinyltoluène ou le p-vinyltoluène, le chlorure de vinyle, le chlorure de vinylidène, l'acrylonitrile, le méthacrylonitrile, ainsi que les esters (C₁-C₄)-alkyliques ou (C₁-C₄)-cycloalkyliques de l'acide méthacrylique, par exemple le méthacrylate de méthyle, le méthacrylate de cyclohexyle, le méthacrylate d'isobornyle et le méthacrylate de tert-butyle ou leurs mélanges.

3. Dispersion aqueuse de produit polymérisé selon l'une quelconque des revendications 1 ou 2, **caractérisée en ce que** du styrène est utilisé comme monomère b).

4. Dispersion aqueuse de produit polymérisé selon l'une quelconque des revendications 1 à 3, **caractérisée en ce que** la température filmogène minimale de la dispersion de produit polymérisé est ≤ 10°C.

5. Utilisation des dispersions aqueuses de produit polymérisé selon l'une quelconque des revendications 1 à 4 dans des agents de revêtement.

6. Utilisation des dispersions aqueuses de produit polymérisé selon la revendication 5, **caractérisée en ce qu'**il s'agit, pour l'agent de revêtement, d'un enduit.

7. Utilisation des dispersions aqueuses de produit polymérisé selon la revendication 6, **caractérisée en ce qu'**il s'agit, pour l'enduit, d'une peinture riche en silicate ou contenant du verre soluble.

8. Agent de revêtement sous forme d'une composition aqueuse, contenant :
a) 0,01 à 50% en poids, de préférence 10 à 20% en poids, d'une dispersion aqueuse de produit polymérisé, selon l'une quelconque des revendications 1 à 4,
b) 0 à 30% en poids, de préférence 2 à 15% en poids, d'au moins un pigment inorganique
c) 20 à 70% en poids de charges inorganiques,
d) 0,1 à 10% en poids d'adjuvants usuels,
ainsi que de l'eau jusqu'à 100% en poids.

9. Agent de revêtement sous forme d'une composition aqueuse, contenant :
a) 0,01 à 50% en poids, de préférence 10 à 20% en poids, d'une dispersion aqueuse de produit polymérisé, selon l'une quelconque des revendications 1 à 4,
b) 0 à 30% en poids, de préférence 2 à 15% en poids, d'au moins un pigment inorganique
c) 20 à 70% en poids de charges inorganiques,
d) 0,1 à 10% en poids d'adjuvants usuels, ainsi que
e) 0,01-5% en poids d'au moins un agent fortement basique grâce auquel le pH peut être réglé au moins à 10
ainsi que de l'eau jusqu'à 100% en poids.

10. Agent de revêtement selon la revendication 9, **caractérisé en ce que** l'agent basique est au moins un silicate soluble dans l'eau.

11. Agent de revêtement selon la revendication 9 ou 10, **caractérisé en ce que** l'agent basique est au moins un verre soluble potassique.

12. Agent de revêtement selon l'une quelconque des revendications 9 à 11, **caractérisé en ce que** le pH de l'agent de revêtement est > 10.

13. Enduit contenant une dispersion aqueuse de produit polymérisé selon l'une quelconque des revendications 1 à 4 comme liant.

14. Enduit contenant du verre soluble, contenant une dispersion aqueuse de produit polymérisé selon l'une quelconque des revendications 1 à 4 comme liant.

15. Utilisation de la dispersion aqueuse de produit polymérisé selon l'une quelconque des revendications 1 à 4 dans des formulations contenant du verre soluble riches en silicate pour l'amélioration de la résistance à l'abrasion humide.
